# FASCICULE DE BREVET EUROPEEN

(11) **EP 2 024 152 B1**
(45) Date de publication et mention de la délivrance du brevet: **17.08.2016**
(21) Numéro de dépôt: 07735916.4
(22) Date de dépôt: 15.05.2007
(51) Int. Cl.: B29C 31/00, B29D 23/20, B65B 43/50, B65G 47/84

(54) **UNITE DE TRANSFERT DE CORPS TUBULAIRES**
VORRICHTUNG ZUM ÜBERTRAGEN ROHRFÖRMIGER KÖRPER
DEVICE FOR TRANSFERRING TUBULAR ARTICLES

(30) Priorité: 02.06.2006 EP 06114923
(43) Date de publication de la demande: 18.02.2009
(73) Titulaire: Aisapack Holding SA, 1896 Vouvry (CH)
(72) Inventeur: STAHL, Christophe, CH-1807 Blonay (CH); VOIGTMANN, Jean-Pierre, CH-1893 Muraz (CH)
(74) Mandataire: Grosfillier, Philippe
(86) Numéro de dépôt international: PCT/IB2007/051847
(87) Numéro de publication internationale: WO 2007/141683

(56) Documents cités:
- FR-A- 2 822 101
- US-A- 5 225 132
- US-A1- 2006 105 077
- US-B1- 6 221 189

## Description

### Domaine de l'invention

La présente invention se situe dans le domaine des corps tubulaires.

Elle peut avantageusement être utilisées avec des emballages en forme de tube qui comprennent une épaule et une jupe.

L'invention concerne plus précisément le transfert de corps tubulaires dans une installation d'assemblage.

### Etat de la technique

Le plus souvent, les installations d'assemblage de composants de tubes comprennent une première unité qui prépare des jupes. Les jupes sont ensuite acheminées sur un convoyeur linéaire et transitent par un ou plusieurs systèmes de transfert qui modifient leur orientation, p.ex. de 90°. Une fois cette opération effectuée, on fixe les épaules sur une extrémité des jupes.

Le document brevet EP 0 175 642 décrit un système de transfert où le changement d'orientation est réalisé par une roue en forme de tronc de cône qui saisit les jupes. La roue est disposée de telle manière à ce que lors de sa rotation, les jupes subissent un changement d'orientation pouvant atteindre 90°.

Le brevet américain US 6,221,189 B1 décrit également un dispositif d'assemblage comprenant une unité de transfert de corps tubulaires. selon le préambule de la revendication 1.

Les installations précitées, outre leur relative grande taille, ne permettent pas de traiter un nombre élevé de tubes par unité de temps. Par « nombre élevé », on entend quelques centaines par minute. Ceci résulte notamment du fait que l'on doive changer l'orientation des jupes.

Afin de remédier aux problèmes exposés ci-dessus, la demanderesse a développé un dispositif permettant de travailler à une cadence de production plus élevée. Voir à cet effet la demande de brevet EP 1 472 062 A1.

Bien que ce dispositif constitue une amélioration par rapport aux autres dispositifs de l'état de la technique, il subsiste un besoin d'atteindre des cadences de production de tubes encore plus élevées, typiquement de l'ordre de 500 tubes/min.

### Résumé de l'invention

La présente invention vise notamment à remédier aux problèmes précités.

Elle concerne une unité de transfert de corps tubulaires pour installation d'assemblage; selon la revendication 1, ladite unité de transfert comprenant plusieurs organes de saisie de corps tubulaires qui sont disposés selon un même plan vertical et comprenant un élément en forme de colonne montée rotative autour de son axe de symétrie, ledit organe de saisie de corps tubulaires étant fixé sur la colonne et se dirigeant selon une direction de préférence perpendiculaire à l'axe de la colonne, caractérisé par le fait que ledit organe de saisie est par ailleurs monté rotatif autour d'un axe dirigé perpendiculairement à l'axe de la colonne de sorte que le mouvement d'un corps tubulaire retenu par ledit organe de saisie résulte de la combinaison de deux mouvements, à savoir de la rotation de la colonne et de la rotation dudit organe de saisie.

Avantageusement, l'organe de saisie de corps tubulaires est monté rotatif autour d'un axe dirigé perpendiculairement à l'axe de la colonne.

De préférence, cet axe est parallèle et distinct de l'axe de symétrie d'un corps tubulaire qui serait fixé à l'organe de saisie. De la sorte, un corps tubulaire peut effectuer un mouvement circulaire autour de cet axe.

Selon une variante de l'invention, cet axe est entraîné par des moyens appropriés.

La colonne est également entraînée en rotation. Avantageusement, les moyens d'entraînement rotatif de la colonne sont couplés aux moyens d'entraînement rotatif dudit axe.

Selon une variante de l'invention, le ou les organes de saisie de corps tubulaires comprennent des moyens d'aspiration qui sont adaptés pour induire un vide, donc une fixation, sur une portion de la paroi latérale des corps tubulaires.

Alternativement, les corps tubulaires peuvent être saisies par des pinces.

Afin d'assurer un transfert entre l'unité de transfert selon l'invention et un dispositif voisin devant saisir des corps tubulaires, on impartit une vitesse tangentielle aux corps tubulaires qui est sensiblement identique à la vitesse du dispositif voisin.

La présente invention permet donc de saisir un corps tubulaire dans une position et de le déposer dans une autre position.

Le corps tubulaire peut être une jupe, avec ou sans épaule, une bouteille ou plus généralement tout élément cylindrique creux. A noter par ailleurs que la section du corps tubulaire n'est pas nécessairement cylindrique. Elle peut être ovale ou polygonale.

Les corps tubulaires peuvent être initialement saisis à partir d'un dispositif statique ou mobile.
Idem pour le transfert vers un autre dispositif après le passage dans l'unité de transfert selon l'invention.

L'unité de transfert selon l'invention peut être intégrée dans une installation d'assemblage de composants de corps tubulaires qui peut traiter simultanément plusieurs composants de corps tubulaires.

L'unité de transfert selon l'invention permet donc d'impartir aux corps tubulaires qu'elle entraîne un mouvement et une trajectoire qui résulte de la combinaison du mouvement induit par la rotation de la colonne et du mouvement induit par la rotation de l'organe de saisie.

Grâce à cette configuration, divers mouvements et trajectoires peuvent être constitués pour un corps tubulaire qui transite par l'unité de transfert selon l'invention. A titre d'exemple, il est possible de saisir initialement des corps tubulaires en un lieu fixe puis, consécutivement à leur passage dans l'unité de transfert, de les déposer en un lieu en mouvement, p.ex. sur l'extrémité du bras d'un autre dispositif en mouvement.

L'invention concerne également l'utilisation d'une unité de transfert selon la revendication 6.

L'invention sera mieux comprise ci-après au moyen d'une description détaillée et d'exemples non-limitatifs illustrés par des figures.

### Brève description des figures

La figure 1 représente une vue en perspective d'un exemple de colonne de transfert selon l'invention.
La figure 2 représente la colonne de la figure 1 vue de face.
La figure 3 représente l'intérieur de la colonne.
La figure 4 illustre la colonne vue de dessus.

### Liste des références numériques utilisées dans les figures

1. Colonne
2. Arbre de commande
3. Organe de saisie
4. Jupe
5. Engrenage conique
6. Axe de rotation des organes de saisie
7. Sens de déplacement
8. Axe de symétrie de la colonne
9. Axe de symétrie de jupe

L'unité de transfert illustrée sur la figure comprend une colonne 1 sur laquelle sont fixés plusieurs organes de saisie 3 disposés selon un même plan vertical. Chaque organe de saisie 3 comporte une fente (non-illustrée) au travers de laquelle un vide est exercé. Ce mécanisme permet de fixer, respectivement détacher, une jupe 4 à l'organe de saisie 3.

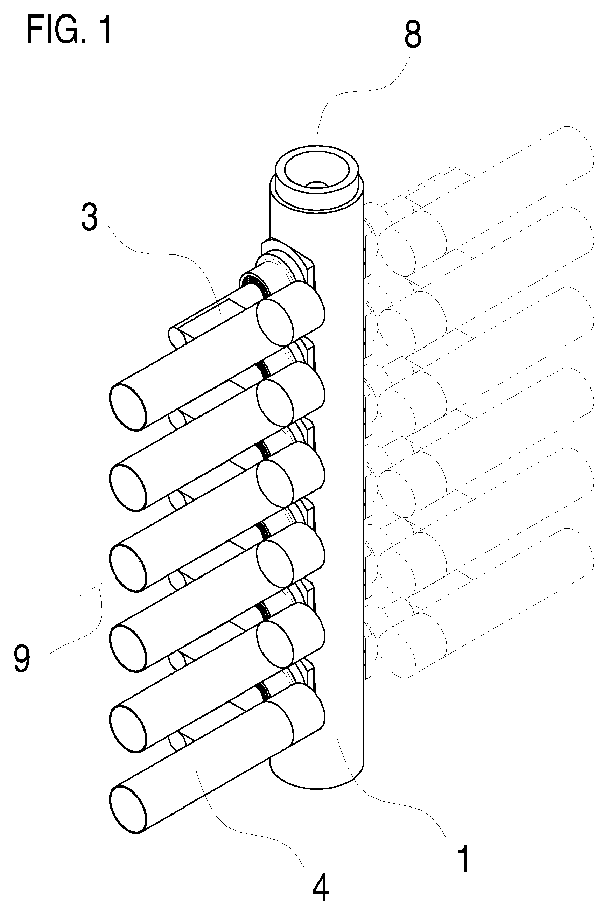

La figure 1 illustre également la position des organes de saisie 3 avant (traits pleins) et après (traits tillés) la rotation de 180° de la colonne 1.

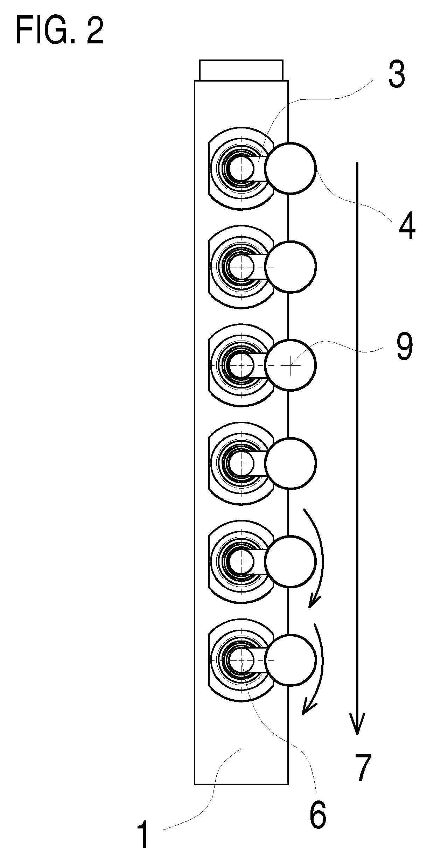

La figure 2 illustre le mouvement effectué par les jupes 4 autour d'un axe 6 disposés perpendiculaire à l'axe 8 de la colonne 1. La flèche verticale 7 représente de façon schématique le sens de déplacement d'un élément voisin, p.ex. un convoyeur doté d'organes de saisie de jupes. De préférence, la vitesse tangentielle des jupes est sensiblement identique à la vitesse de déplacement de l'élément voisin, ce qui permet un transfert aisé des jupes vers le système voisin. En effet, au moment du transfert, la vitesse relative entre l'unité de transfert selon l'invention et l'élément voisin est nulle.

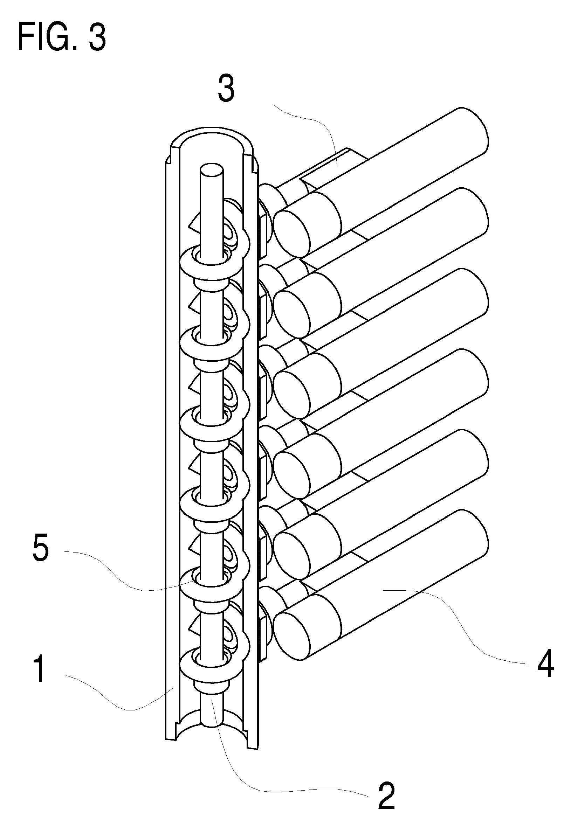

La figure 3 montre un arbre de commande 2 qui assure la rotation des organes de saisies 3 par l'intermédiaire d'engrenages coniques 5, ces derniers étant eux-mêmes couplés à une tige qui se confond avec l'axe 6 qui est perpendiculaire à l'axe 8 de la colonne 1. Ce couplage entre les deux axes 8,6 a pour conséquence de synchroniser les vitesses de rotation des deux axes. Exprimé différemment, lorsque l'arbre de commande 2 tourne, les jupes 4 tournent autour de l'axe 6 qui est perpendiculaire à l'axe 8 de la colonne 1.

L'entraînement des éléments précités peut être réalisé de différentes manières, p.ex. au moyen d'un engrenage, de tringles ou de courroies.

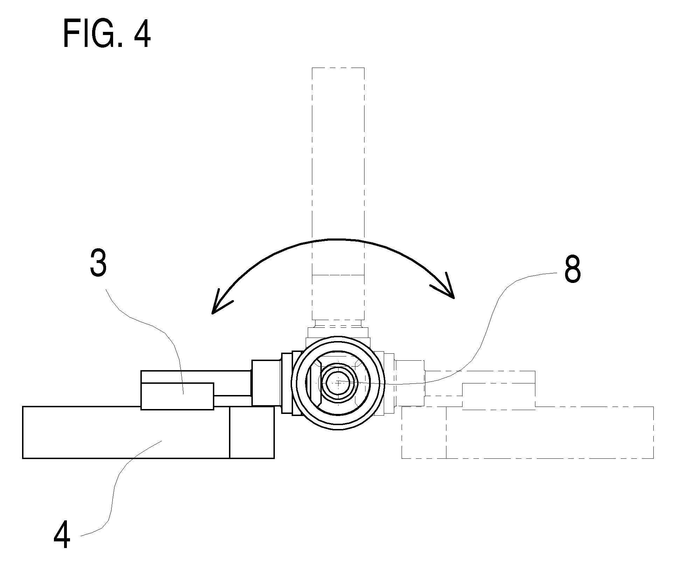

Enfin, la figure 4 montre trois positions angulaires différentes des directions d'une jupe lors de sa rotation autour de l'axe 8 de la colonne 1.

Il va de soi que l'invention ne se limite pas aux exemples illustrés décrits précédemment.
La colonne n'est pas nécessairement disposée selon une direction verticale.
Sa section peut être de forme quelconque, polygonale ou circulaire.
Le nombre et la distribution des organes de saisie des jupes peut également être quelconque.
D'autres systèmes de couplage entre les axes de rotation peuvent être utilisés.

L'axe de rotation des organes de saisies 3, n'est pas forcément perpendiculaire à l'axe de symétrie 8 de la colonne 1 mais peut former un angle quelconque par rapport à celui-ci.

L'axe de symétrie de jupe 9, n'est pas forcément parallèle à l'axe de rotation des organes de saisies 6 mais peut former un angle quelconque par rapport à celui-ci.

Plus généralement, l'invention couvre n'importe quel type d'unité de transfert telle que définie dans les revendications.

## Revendications

1. Unité de transfert de corps tubulaires (4) pour installation d'assemblage; ladite unité de transfert comprenant plusieurs organes de saisie (3) de corps tubulaires (4) qui sont disposés selon un même plan vertical et comprenant un élément en forme de colonne (1) montée rotative autour de son axe de symétrie (8), ledit organe de saisie (3) de corps tubulaires (4) étant fixé sur la colonne (1) et se dirigeant selon une direction (9) de préférence perpendiculaire à l'axe de la colonne (1), **caractérisé par le fait que** ledit organe de saisie (3) est par ailleurs monté rotatif autour d'un axe (6) dirigé perpendiculairement à l'axe de la colonne (1), de sorte que le mouvement d'un corps tubulaire (4) retenu par ledit organe de saisie (3) résulte de la combinaison de deux mouvements, à savoir de la rotation de la colonne (1) et de la rotation dudit organe de saisie (3).

2. Unité de transfert selon la revendication 1 **caractérisée en ce que** ledit axe (6) est parallèle à l'axe de symétrie (9) d'un corps tubulaire (4) qui serait fixé à l'organe de saisie (3).

3. Unité de transfert selon la revendication 2 comprenant des moyens d'entraînement (2,5) dudit axe (6).

4. Unité de transfert selon la revendication 3 comprenant des moyens d'entraînement rotatif (2) de la colonne (1) qui sont couplés aux moyens d'entraînement (2,5) dudit axe (6).

5. Unité de transfert selon l'une quelconque des revendications précédentes **caractérisé en ce que** le ou les organes de saisie (3) de corps tubulaires (4) comprennent des moyens d'aspiration.

6. Utilisation d'une unité de transfert selon la revendication 4 ou 5 **caractérisée en ce que** la vitesse tangentielle d'un corps tubulaire (4) en rotation autour dudit axe (6) est sensiblement identique à la vitesse d'un dispositif voisin qui devrait saisir les corps tubulaires (4) de l'unité de transfert.

## Patentansprüche

1. Vorrichtung zum Übertragen rohrförmiger Körper (4) für eine Montageanlage, wobei die Übertragungsvorrichtung mehrere Organe (3) zum Greifen rohrförmiger Körper (4) umfasst, die in derselben vertikalen Ebene angeordnet sind, und ein säulenförmiges Element (1) umfasst, das um seine Symmetrieachse (8) drehbar angebracht ist, wobei das Organ (3) zum Greifen rohrförmiger Körper (4) an der Säule (1) befestigt und in eine Richtung (9) ausgerichtet ist, die vorzugsweise senkrecht zu der Achse der Säule (1) ist, durch die Tatsache gekennzeichnet, dass das Greiforgan (3) außerdem um eine senkrecht zu der Achse der Säule (1) ausgerichtete Achse (6) drehbar angebracht ist, sodass die Bewegung eines rohrförmigen Körpers (4), der von dem Greiforgan (3) gehalten wird, aus der Kombination von zwei Bewegungen resultiert, und zwar aus der Rotation der Säule (1) und aus der Rotation des Greiforgans (3).

2. Übertragungsvorrichtung nach Anspruch 1, **dadurch gekennzeichnet, dass** die Achse (6) parallel zu der Symmetrieachse (9) eines rohrförmigen Körpers (4) ist, der an dem Greiforgan (3) befestigt wäre.

3. Übertragungsvorrichtung nach Anspruch 2, umfassend Mittel (2, 5) zum Antreiben der Achse (6).

4. Übertragungsvorrichtung nach Anspruch 3, umfassend Mittel (2) zum drehenden Antreiben der Säule (1), die mit Mitteln (2, 5) zum Antreiben der Achse (6) gekoppelt sind.

5. Übertragungsvorrichtung nach einem der vorhergehenden Ansprüche, **dadurch gekennzeichnet, dass** das Organ oder die Organe (3) zum Greifen rohrförmiger Körper (4) Ansaugmittel umfasst bzw. umfassen.

6. Verwendung einer Übertragungsvorrichtung nach Anspruch 4 oder 5, **dadurch gekennzeichnet, dass** die Tangentialgeschwindigkeit eines sich um die Achse (6) drehenden rohrförmigen Körpers (4) im Wesentlichen mit der Geschwindigkeit einer benachbarten Vorrichtung identisch ist, welche die rohrförmigen Körper (4) der Übertragungsvorrichtung greifen sollte.

## Claims

1. Transfer unit for tubular bodies (4) for assembly equipment; said transfer unit comprising a plurality of gripping members (3) for tubular bodies (4) which are arranged in the same vertical plane and comprising a column-shaped element (1) rotatably mounted about its axis of symmetry (8), said gripping member (3) for tubular bodies (4) being fixed to the column (1) and being oriented in a direction (9) which is preferably perpendicular to the axis of the column (1), **characterized by** the fact that said gripping member (3) is moreover rotatably mounted about an axis (6) oriented perpendicularly to the axis of the column (1), such that the movement of a tubular body (4) retained by said gripping member (3) results from the combination of two movements, namely from the rotation of the column (1) and the rotation of said gripping member (3).

2. Transfer unit according to Claim 1, **characterized in that** said axis (6) is parallel to the axis of symmetry (9) of a tubular body (4) which might be fixed to the gripping member (3).

3. Transfer unit according to Claim 2 comprising means (2, 5) for driving said axis (6).

4. Transfer unit according to Claim 3 comprising means (2) for driving the column (1) in rotation which are coupled to the means (2, 5) for driving said axis (6).

5. Transfer unit according to any one of the preceding claims, **characterized in that** the gripping member(s) (3) for tubular bodies (4) comprise suction means.

6. Use of a transfer unit according to Claim 4 or 5, **characterized in that** the tangential speed of a tubular body (4) in rotation about said axis (6) is substantially identical to the speed of an adjacent device which is intended to grip the tubular bodies (4) of the transfer unit.
